(19) Europäisches Patentamt
European Patent Office
Office européen des brevets

(11) Veröffentlichungsnummer: **0 063 302**
**A1**

(12) # EUROPÄISCHE PATENTANMELDUNG

(21) Anmeldenummer: **82102888.3**

(22) Anmeldetag: **05.04.82**

(51) Int. Cl.$^3$: **C 08 K 3/04**
C 08 J 3/22, C 08 L 75/04

(30) Priorität: **18.04.81 DE 3115651**

(43) Veröffentlichungstag der Anmeldung:
**27.10.82 Patentblatt 82/43**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Bremer, Fritz, Dr.**
**Paul-Klee-Strasse 64**
**D-5090 Leverkusen 1(DE)**

(72) Erfinder: **Wolf, Karlheinz, Dr.**
**Paul-Klee-Strasse 77**
**D-5090 Leverkusen 1(DE)**

(72) Erfinder: **Kressner, Michael**
**Förstchen 33 a**
**D-5653 Leichlingen(DE)**

(72) Erfinder: **Hörnle, Reinhold, Dr.**
**Hufelandstrasse 42**
**D-5000 Köln 80(DE)**

(72) Erfinder: **Kullik, Werner, Dr.**
**Max-Beckmann-Strasse 33**
**D-5090 Leverkusen(DE)**

(72) Erfinder: **Pape, Georg, Dr.**
**Imbach 43**
**D-5090 Leverkusen(DE)**

(54) **Russpräparationen.**

(57) Rußpräparationen enthaltend
A) Ruß
B) ein unter Normalbedingungen flüssiges Polyetherpolyol, hergestellt durch Anlagerung von Ethylenoxid und/oder Propoxylenoxid an ein Polyol und
C) ein vinylisches Polymerisat einer Verbindung der Formel

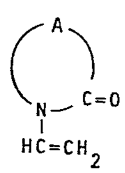

(1)

in der A für die restlichen Glieder eine 5 bis 7-gliedrigen Ringes steht,
Verfahren zu ihrer Herstellung sowie Verfahren zum Färben von Polyurethan-Kunststoffen unter Verwendung der Rußpräparationen.

EP 0 063 302 A1

BAYER AKTIENGESELLSCHAFT 5090 Leverkusen, Bayerwerk

Zentralbereich
Patente, Marken und Lizenzen PG/Kü-c

# Rußpräparationen

Die Erfindung betrifft neue Rußpräparationen, Verfahren zu ihrer Herstellung sowie Verfahren zum Färben von Polyurethan-Kunststoffen unter Verwendung der neuen Rußpräparationen.

Die Präparationen enthalten

A) Ruß,

B) ein unter Normalbedingungen flüssiges Polyetherpolyol, hergestellt durch Anlagerung von Ethylenoxid und/oder Propylenoxid an ein Polyol und

C) ein vinylisches Polymerisat einer Verbindung der Formel

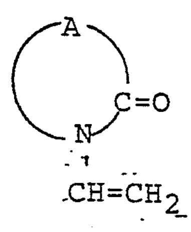

(I)

in der A für die restlichen Glieder eines 5 bis 7-gliedrigen Ringes steht.

Bevorzugt enthalten die Präparationen:

10 - 30 Gewichtsteile A, 65 - 89,8 Gewichtsteile B sowie 0,2 - 5,0 Gewichtsteile C.

Besonders bevorzugt enthalten die Präparationen 12 - 20 Gewichtsteile A, 77,7 - 88 Gewichtsteile B und 0,3 - 2 Gewichtsteile C.

Bei den unter B eingesetzten Polyetherpolyolen handelt es sich um Verbindungen, die bei T = 20°C und p = 760 Torr flüssig sind, und die vorzugsweise Molekulargewichte von 50 bis 10 000 aufweisen. Sie werden hergestellt durch Anlagerung von Ethylenoxid und/oder Propylenoxid an Polyole wie Ethylenglycol, Butylenglycol und insbesondere Trimethylolpropan.

In Formel I bezeichnet A vorzugsweise:

$-(CH_2)_3-$, $-(CH_2)_4-$, $-(CH_2)_5-$, $-\underset{CH_3}{CH}-CH_2-CH_2-$, $-\underset{C_2H_5}{CH}-CH_2-CH_2-$,

$CH_2-\underset{CH_3}{CH}-O-$, $-CH_2-CH_2-O-CH_2-$ und $-(CH_2)_3-O-$.

Diese Verbindungen sind an sich bekannt /s. z.B. Ullmanns Encyclopädie der technischen Chemie, Band 14, S. 261 - 264 (1963)/.

Besonders geeignet zum Einsatz in die erfindungsgemäßen Rußpräparationen sind solche Polymerisate von Verbindungen der Formel I, deren mittlere Molekulargewichte zwischen $10^5$ und $10^7$ liegen.

Bevorzugt eingesetzt werden Polyvinylpyrrolidon und insbesondere Polyvinylpyrrolidone, deren durch relative Viskositätsmessungen bestimmter K-Wert zwischen 15 und 100, insbesondere zwischen 30 und 90, liegt. Zur Errechnung des Viskositätskoeffizienten K siehe z.B. Modern Plastics, Bd. 23, Nr. 3, S. 157 - 161, 212, 214, 216, 218 (1945).

Die Herstellung der neuen Präparationen erfolgt durch Dispergieren der Komponenten A, B und C in üblichen Naßzerkleinerungsaggregaten wie Attritoren, Walzenstühlen, Dissolvern, Rotor-Stator-Mühlen, Knetern, Kugelmühlen und mit ganz besonderem Vorteil in schnellaufenden Rührwerkskugelmühlen.

Die Rußpräparationen zeichnen sich durch eine gute Fließfähigkeit aus und eignen sich sehr gut zum Färben von Polyurethankunststoffen.

Das erfindungsgemäße Verfahren zum Färben von Polyurethan-Kunststoffen ist dadurch gekennzeichnet, daß man die neuen Rußpräparationen verwendet.

Hierbei werden die Rußpräparationen entweder vor der Polyurethanherstellung mit den Polyalkoholen gemischt und anschließend nach bekannten Verfahren durch Umsetzung mit Polyisocyanaten der Polyurethankunststoff hergestellt, oder man dosiert die Rußpräparationen während der Polyurethanherstellung den Reaktionskomponenten zu.

Beispiel 1

Eine schwarze Farbstoffpräparation aus 15,5 Teilen Farbruß, 0,5 Teilen Polyvinylpyrolidon mit einem K-Wert von 30 und 84 Teilen eines Polyetherpolyols, hergestellt durch Umsetzung von Trimethylolpropan und 3 Mol Ethylenoxid, wird wie folgt hergestellt:
Über eine Dosierschnecke werden Ruß, Polyvinylpyrrolidon und Polyetherpolyol in eine schnellaufende, mit Stahlperlen beschickte, kontinuierlich arbeitende Rührwerksmühle eingetragen. Man erhält eine fließfähige Farbpaste, die zum Einfärben von Polyurethan-Schaum geeignet ist: Wird eine analoge Präparation ohne Polyvinylpyrrolidon hergestellt, so ist ihre Viskosität so hoch, daß eine Herstellung in der Perlmühle nicht möglich ist.

Patentansprüche

1. Rußpräparationen enthaltend

A) Ruß,

B) ein unter Normalbedingungen flüssiges Polyetherpolyol, hergestellt duch Anlagerung von Ethylenoxid und/oder Propylenoxid an ein Polyol und

C) ein vinylisches Polymerisat einer Verbindung der Formel

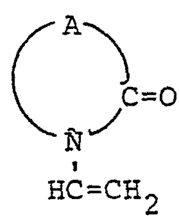

(I)

in der A für die restlichen Glieder eines 5 bis 7-gliedrigen Ringes steht.

2. Präparationen gemäß Anspruch 1, enthaltend 10 - 30 Gewichtsteile A, 65 - 89,8 Gewichtsteile B und 0,2 - 5 Gewichtsteile C.

3. Präparationen gemäß Anspruch 1, enthaltend 12 - 20 Gewichtsteile A, 77,7 - 88 Gewichsteile B und 0,3 - 2 Gewichtsteile C.

4. Präparationen gemäß den Ansprüchen 1 - 3 enthaltend ein Polyetherpolyol mit einem Molekulargewicht von 50 bis 10 000.

5. Präparationen gemäß den Ansprüchen 1 bis 4 enthaltend ein vinylisches Polymerisat einer Verbindung der Formel I, in der A für
$-(CH_2)_3-$, $-(CH_2)_4-$, $-(CH_2)_5-$, $-\underset{CH_3}{CH}-CH_2-CH_2-$,
$-\underset{C_2H_5}{CH}-CH_2-CH_2-$, $-CH-\underset{CH_3}{CH}-O-$, $-CH_2-CH_2-O-CH_2-$ oder
$-(CH_2)_3-O-$ steht.

6. Präparationen gemäß den Ansprüchen 1 bis 5, bei denen das mittlere Molekulargewicht des Polymerisats der Verbindung der Formel I zwischen $10^5$ und $10^7$ liegt.

7. Präparationen gemäß den Ansprüchen 1 bis 4 enthaltend Polyvinylpyrrolidon.

8. Präparationen gemäß Anspruch 7 enthaltend Polyvinylpyrrolidon, dessen durch relative Viskositätsmessungen bestimmter K-Wert zwischen 15 und 100, insbesondere zwischen 30 und 90, liegt.

9. Verfahren zur Herstellung einer Präparation gemäß den Ansprüchen 1 bis 8, dadurch gekennzeichnet, daß man die Komponenten A, B und C in üblichen Naßzerkleinerungsaggregaten dispergiert.

10. Verfahren zum Färben von Polyurethan-Kunststoffen, dadurch gekennzeichnet, daß man Rußpräparationen gemäß den Ansprüchen 1 bis 8 verwendet.

0063302

Europäisches Patentamt

# EUROPÄISCHER RECHERCHENBERICHT

Nummer der Anmeldung

EP 82 10 2888

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-2 039 924 (BASF FARBEN & FASERN AG)<br>*Anspruch 1*<br>--- | 1 | C 08 K 3/04<br>C 08 J 3/22<br>C 08 L 75/04 |
| A | US-A-3 905 938 (K. BARKEY et al).<br>*Anspruch 1*<br>----- | 1 | |
| | | | RECHERCHIERTE SACHGEBIETE (Int. Cl. 3) |
| | | | C 08 J<br>C 08 K<br>C 08 L<br>C 09 C |

Der vorliegende Recherchenbericht wurde für alle Patentansprüche erstellt

| Recherchenort | Abschlußdatum der Recherche | Prüfer |
|---|---|---|
| DEN HAAG | 26-07-1982 | HOFFMANN K.W. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82